# EUROPEAN PATENT SPECIFICATION

(11) **EP 2 192 135 B1**
(45) Date of publication and mention of the grant of the patent: **25.04.2012**
(21) Application number: 08828204.1
(22) Date of filing: 01.09.2008
(51) Int. Cl.: C08F 220/20, C08F 2/50, C08F 290/06, C09D 4/02, C09D 7/12, C09D 143/04, C09D 183/08

(54) **PHOTOCURABLE RESIN COMPOSITION**
LICHTHÄRTBARE HARZZUSAMMENSETZUNG
COMPOSITION DE RÉSINE PHOTODURCISSABLE

(30) Priority: 31.08.2007 JP 2007225792
(43) Date of publication of application: 02.06.2010
(73) Proprietor: Dow Corning Toray Co., Ltd., Tokyo 100-0005 (JP)
(72) Inventor: MORIKAWA, Ikutaro, Ichihara-shi Chiba 299-0108 (JP); WAKITA, Mari, Ichihara-shi Chiba 299-0108 (JP); SASAKI, Motoshi, Ichihara-shi Chiba 299-0108 (JP)
(74) Representative: Gillard, Richard Edward
(86) International application number: PCT/JP2008/066139
(87) International publication number: WO 2009/028741

(56) References cited:
- GB-A- 2 018 622
- GB-A- 2 089 826
- JP-A- 07 238 106
- JP-A- 08 134 116
- JP-A- 2003 216 060
- JP-A- 2006 036 972
- JP-A- 2006 307 151
- US-A- 4 218 508
- US-A- 5 811 472
- US-A1- 2001 027 231

## Description

### Technical Field

The present invention relates to a photocurable resin composition that forms a cured film that exhibits an excellent weathering resistance. More particularly, the present invention relates to a photocurable resin composition that can be readily cured by ultraviolet radiation and that cures to form an antiweathering cured film that exhibits an excellent ultraviolet absorptivity around 300 nm, an excellent physical strength, an excellent resistance to staining, an excellent film uniformity, and an excellent adherence by the film. The present invention also relates to a coating agent comprising this photocurable resin composition and to a substrate having on its surface a cured film from this photocurable resin composition.

### Background Art

High energy radiation-curable coating agents that cure by ultraviolet radiation are well suited in particular for covering the surface of and protecting substrates composed of a thermoplastic resin that exhibits a low heat resistance and have the advantage of imparting excellent physical properties, e.g., staining resistance, scratch resistance, smoothness, and so forth, without a significant loss in the physical strength of these substrates.

Such high energy radiation-curable coating agents are known. For example, an abrasion-resistant ultraviolet-curable coating composition is known that comprises a non-silyl acrylate, colloidal silica, an acryloxy-functional silane, and a photopolymerization initiator (Patent Reference 1). Also known are a high energy radiation-curable composition that characteristically comprises an alkoxy group-containing organopolysiloxane and a multifunctional acrylate (Patent Reference 2) and a high energy-radiation curable acryloxysilicone composition having an improved physical strength and comprising a multifunctional acrylate, colloidal silica, an organoalkoxysilane, and an amino-modified organopolysiloxane or its Michael addition reaction product (Patent Reference 3). These references teach that known photopolymerization initiators can be suitably used for curing their compositions with ultraviolet radiation. However, substrates composed of a thermoplastic resin such as a polycarbonate resin are quite susceptible to photodegradation by ultraviolet radiation at around the 300 nm wavelength, and as a result the timewise deterioration of the coated substrate itself has been a problem when these substrates are used in an environment under long-term exposure to solar radiation, for example, outdoors.

Another problem has been the unavoidable degradation of the thermoplastic resin when a high energy radiation-curable coating agent is applied to these thermoplastic resin substrates and curing is performed with ultraviolet radiation.

It is known that an ultraviolet absorber can be incorporated for the purpose of improving the weathering resistance by preventing the aforementioned ultraviolet radiation-induced degradation of thermoplastic resin substrates (for example, paragraph number 0019 of Patent Reference 3). However, this ultraviolet absorber ends up also absorbing the ultraviolet radiation required for the cure of the coating agent, and, as a consequence, when large amounts are incorporated in the coating agent for the purpose of improving the weathering resistance, the ultraviolet radiation-mediated curing of the coating agent is inhibited. Since this cure inhibition is directly linked to a reduction in the physical strength, staining resistance, film strength, and adherence of the cured film and to a lengthening of the ultraviolet exposure time required for curing, the known photocurable resin compositions have not had satisfactory properties in particular for use as a coating agent for, e.g., polycarbonate resin, which is easily photodegraded by ultraviolet radiation around the 300 nm wavelength.

With regard, on the other hand, to ultraviolet-curable thermochromic ink compositions, the use of a short wavelength ultraviolet absorber and a long wavelength photopolymerizable composition has been proposed for the purposes of preventing curing defects in the ink itself and causing lightfastness to co-exist with curability (Reference 4). However, there is no teaching or suggestion whatever in this reference with regard to a coating agent that realizes an improved weathering resistance for the substrate.and is directed to the physical strength, staining resistance, film uniformity, and film adherence of a cured film that covers the substrate, and in particular the use of a hydroxyphenyltriazine-type compound as an ultraviolet absorber is in no way taught or suggested.

[Patent Reference 1] JP 57-500984 A
[Patent Reference 2] JP 2002-012638 A
[Patent Reference 3] JP 2004-269589 A
[Patent Reference 4] JP 07-324178 A (JP 3,000,189 B)

US 5,811,472 concerns radiation curable compositions comprising an acrylic monomer, silica, an ultraviolet initiator, a hindered amine light stabilizer, and an acrylic functional siloxane additive.

US 2001/0027231 concerns a coating agent comprising a monomer or monomer mixture composed of 50 to 100 % by weight of a polyfunctional (meth)acrylate monomer having two or more (meth)acryloyloxy groups and 0 to 50% by weight of a monofunctional (meth)acrylate monomer, and colloidal silica.

GB 2089826 concerns UV curable coating compositions comprising a UV light cross-linkable polyfunctional acrylate monomer, colloidal silica, an acryloxy functional silane and a combination of ketone-type and hindered amine-type photoinitiators.

### Disclosure of the Invention

The present invention seeks to solve the problems identified above by introducing a photocurable resin composition that exhibits an excellent storage stability, that can be easily cured by ultraviolet radiation, and that cures to form an antiweathering cured film that exhibits an excellent ultraviolet absorbing performance at around the 300 nm wavelength, an excellent physical strength, an excellent stain resistance, an excellent film uniformity, and an excellent adherence by the film. The present invention also relates to a coating agent comprising this photocurable resin composition and further relates to a substrate that has on its surface a cured film from this photocurable resin composition.

The present inventors carried out intensive investigations in order to solve the problems identified above and as a result discovered that these problems could be solved by a photocurable resin composition comprising the following components (A) to (F). The present invention was achieved based on this discovery.
(A) 100 weight parts of a multifunctional acrylate or a multifunctional methacrylate,
(B) 1 to 100 weight parts of an aliphatically unsaturated bond-containing organoalkoxysilane,
(C) 1 to 300 weight parts colloidal silica,
(D) 0.01 to 20 weight parts of an ultraviolet absorber that has an absorption wavelength at 220 to 400 nm,
(E) 0.01 to 30 weight parts of a photopolymerization initiator that has an absorption wavelength at 300 to 450 nm, and
(F) 0.2 to 20 weight parts of an amino-modified organopolysiloxane.

The present invention was also achieved by the present inventors by the discovery that the previously identified problems could best be solved by selecting as component (D) an ultraviolet absorber having an absorption wavelength at 220 to 400 nm and selected from the group consisting of hydroxyphenyltriazine-type compounds, benzophenone-type compounds, and cyanoacrylate-type compounds and by selecting as component (E) a photopolymerization initiator having an absorption wavelength at 300 to 450 nm and selected from the group consisting of 2-methyl-1-[4-(methylthio)phenyl]-2-morpholinopropan-1-one, 2-benzyl-2-dimethylamino-1-(4-morpholinophenyl)butanon-1-one, 2,4,6-trimethylbenzoyldiphenylphosphine oxide, bis-2,6-dimethoxybenzoyl-2,4,4-trimethylpentylphosphine oxide, and benzophenone.

The present invention was also achieved by the present inventors by the discovery that the adherence to substrate of the cured film from the aforementioned photocurable resin composition can be improved by sequentially coating the surface of the substrate by coating the surface of the substrate with a primer layer provided by a synthetic resin-containing composition and thereafter applying the aforementioned photocurable resin composition on the surface of the primer layer and forming a cured film.

Thus, the present invention resides in a photocurable resin composition comprising the following components (A) to (F).
(A) 100 weight parts of a multifunctional acrylate or a multifunctional methacrylate
(B) 1 to 100 weight parts of an aliphatically unsaturated bond-containing organoalkoxysilane
(C) 1 to 300 weight parts colloidal silica
(D) 0.01 to 20 weight parts of an ultraviolet absorber that has an absorption wavelength at 220 to 400 nm
(E) 0.01 to 30 weight parts of a photopolymerization initiator that has an absorption wavelength at 300 to 450 nm
(F) 0.2 to 20 weight parts of an amino-modified organopolysiloxane.

The second invention resides in the aforementioned photocurable resin in which component (D) is (D1) an ultraviolet absorber that has an absorption wavelength at 260 to 400 nm and component (E) is (E1) a photopolymerization initiator that has an absorption wavelength at 360 to 45.0 nm:

The third invention resides in the aforementioned photocurable resin composition that additionally contains (G) 0.1 to 15 weight parts of a hindered amine-type photostabilizer.

The fourth invention resides in the aforementioned photocurable resin composition that additionally contains (H) 10 to 1000 weight parts of an alcohol-containing organic solvent.

The fifth invention resides in the aforementioned photocurable resin composition wherein component (A) is a multifunctional acrylate that contains an at least pentafunctional acrylate.

The sixth invention resides in the aforementioned photocurable resin composition wherein component (E) is aphotopolymerization initiator having an absorption wavelength at 300 to 450 nm, that is selected from the group consisting of 2-methyl-1-[4-(methylthio)phenyl]-2-morpholinopropan-1-one, 2-benzyl-2-dimethylamino-1-(4-morpholinophenyl)butanon-1-one, 2,4,6-trimethylbenzoyldiphenylphosphine oxide, bis-2,6-dimethoxybenzoyl-2,4,4-trimethylpentylphosphine oxide, and benzophenone.

The seventh invention resides in the aforementioned photocurable resin composition wherein component (D) is an ultraviolet absorber having an absorption wavelength at 220 to 400 nm that is selected from the group consisting of hydroxyphenyltriazine-type compounds, benzophenone-type compounds, and cyanoacrylate-type compounds.

The eighth invention resides in a coating agent comprising the aforementioned photocurable resin composition.

The ninth invention resides in the aforementioned coating agent used for polycarbonate resin articles.

The tenth invention resides in a substrate selected from the group consisting of plastics, glass, ceramics, metals, concrete, wood, fibrous fabrics and textiles, fibers, nonwoven fabrics, leather, paper, and stone and having on its surface a cured film from the aforementioned photocurable resin composition.

The eleventh invention resides in a substrate that has a primer layer comprising a synthetic resin-containing composition between the surface of the substrate and the cured film from the aforementioned photocurable resin composition.

The twelfth invention resides in the aforementioned substrate wherein the synthetic resin is an acrylic-type resin selected from the group consisting of polyacrylic resins, polymethacrylic resins, and polymers of multifunctional acrylates or multifunctional methacrylates.

The thirteenth invention resides in the aforementioned substrate wherein the substrate is a polycarbonate resin.

The fourteenth invention resides in a method of producing the aforementioned substrate, characterized by sequentially coating the surface of the substrate by
coating a primer layer on the surface of the substrate by applying a primer coating composition comprising a synthetic resin-containing composition on the surface of the substrate and photocuring; and
thereafter forming a cured film by applying the aforementioned photocurable resin composition on the surface of the primer layer and photocuring.

The fifteenth invention resides in the aforementioned substrate, characterized in that the primer layer is provided by photocuring a composition comprising (A) 100 weight parts of a multifunctional acrylate or multifunctional methacrylate, (B) 1 to 100 weight parts of an aliphatically unsaturated bond-containing organoalkoxysilane, 0.01 to 30 weight parts of a photopolymerization initiator, and 10 to 2000 weight parts of an organic solvent.

### Brief Description of the Drawings

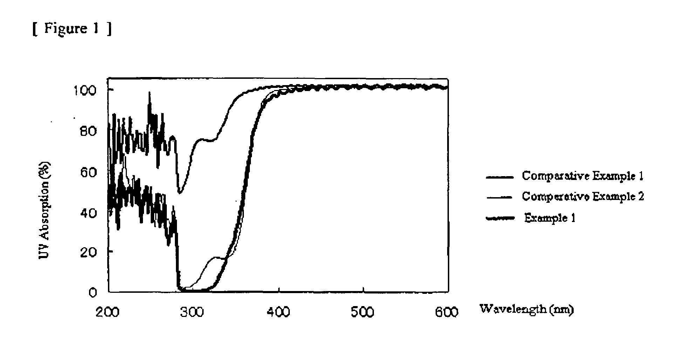

Figure 1 is a graph that shows the ultraviolet (UV) absorption characteristics of cured films provided by the ultraviolet radiation-curable compositions (coating agents) of Example 1, Comparative Example 1, and Comparative Example 2.

### Effects of the Invention

The present invention provides a photocurable resin composition that exhibits an excellent storage stability, that can be easily cured by ultraviolet radiation, and that cures to form an antiweathering cured film that exhibits an excellent ultraviolet absorbing performance at around the 300 nm wavelength, an excellent physical strength, an excellent stain resistance, an excellent film uniformity, and an excellent adherence by the film. The present invention also provides a coating agent comprising this photocurable resin composition and a substrate having on its surface a cured film provided by this photocurable resin composition. The presence of the cured film provided by this photocurable resin composition can substantially improve the weathering resistance of the substrate whose surface is coated by this cured film, while the cured film itself exhibits an excellent hardness, an excellent ability to prevent the attachment of oily contaminants, an excellent oily contaminant cleanability, an excellent scratch resistance, an excellent transparency, an excellent water repellency, an excellent adherence, an excellent smoothness, and an excellent uniformity.

### Best Mode for Carrying Out the Invention

The photocurable resin composition of the present invention comprises the following components (A) to (F).
(A) 100 weight parts of a multifunctional acrylate or a multifunctional methacrylate,
(B) 1 to 100 weight parts of an aliphatically unsaturated bond-containing organoalkoxysilane,
(C) 1 to 300 weight parts colloidal silica,
(D) 0.01 to 20 weight parts of an ultraviolet absorber that has an absorption wavelength at 220 to 400 nm, and
(E) 0.01 to 30 weight parts of a photopolymerization initiator that has an absorption wavelength at 300 to 450 nm.
(F) 0.2 to 20 weight parts of an amino-modified organopolysiloxane.

In addition, while the pnotocurable resin composition of the present invention essentially comprises the aforementioned components (A) to (F) it optionally also contains the following components (G) to (I):
(G) 0.1 to 15 weight parts of a hindered amine-type photostabilizer,
(H) 10 to 1000 weight parts of an alcohol-containing organic solvent, and
(I) 0.5 to 20 weight parts water.

Components (A) to (I) are described in detail herebelow.

Component (A) is multifunctional acrylate or multifunctional methacrylate and imparts ultraviolet curability to the composition. Component (A) is preferably a multifunctional acrylate and may or may not contain the fluorine atom and/or silicon atom, but preferably contains neither the fluorine atom nor the silicon atom. This multifunctional acrylate is an at least difunctional (for example, difunctional to eicosafunctional) acrylate monomer or an at least difunctional (for example, difunctional to eicosafunctional) acrylate oligomer. Viewed from the standpoint of the curability, an at least pentafunctional (for example, pentafunctional to decafunctional) acrylate is preferably used. This multifunctional acrylate is specifically exemplified by difunctional acrylate monomers such as 1,6-hexanediol diacrylate, 1,4-butanediol diacrylate, ethylene glycol diacrylate, diethylene glycol diacrylate, tetraethylene glycol diacrylate, tripropylene glycol diacrylate, neopentyl glycol diacrylate, 1,4-butanediol dimethacrylate, poly(butanediol) diacrylate, tetraethylene glycol dimethacrylate, 1,3-butylene glycol diacrylate, triethylene glycol diacrylate, triisopropylene glycol diacrylate, polyethylene glycol diacrylate, bisphenol A dimethacrylate, and so forth; trifunctional acrylate monomers such as trimethylolpropane triacrylate, trimethylolpropane trimethacrylate, pentaerythritol monohydroxy triacrylate, trimethylolpropane triethoxy triacrylate, and so forth; tetrafunctional acrylate monomers such as pentaerythritol tetraacrylate, ditrimethylolpropane tetraacrylate, and so forth; pentafunctional and higher functional acrylate monomers such as dipentaerythritol hexaacrylate, dipentaerythritol (monohydroxy) pentaacrylate, and so forth; and acrylate oligomers such as bisphenol A epoxy diacrylate, hexafunctional aromatic urethane acrylate (trademark: Ebecryl 220), aliphatic urethane diacrylate (trademark: Ebecryl 230), and tetrafunctional polyester acrylate (trademark: Ebecryl 80). A single one of these multifunctional acrylates may be used or two or more may be used in combination. The presence of an at least pentafunctional acrylate is preferred among the preceding, and the content thereof is preferably at least 30 weight% of component (A) (for example 30 weight% to 100 weight%), more preferably at least 50 weight%, and even more preferably at least 80 weight%.

Component (B), an aliphatically unsaturated bond-containing organoalkoxysilane, treats the surface of the component (C) colloidal silica and thereby improves its affinity with component (A) and imparts an excellent storage stability to the composition of the present invention. This component also provides the composition of the present invention with ultraviolet curability in that it crosslinks with component (A) during curing and thus raises the degree of crosslinking in the cured product. Component (B) may or may not contain the fluorine atom, but generally does not contain the fluorine atom. Component (B) is preferably a compound represented by the general formula R¹ₐYSi(OR²)₃₋ₐ. R¹ in the formula is a substituted or unsubstituted monovalent hydrocarbyl group, for example, C₁₋₂₀, that does not contain an aliphatically unsaturated bond, and can be exemplified by alkyl such as methyl, ethyl, propyl, butyl, isobutyl, octyl, decyl, and so forth; aryl such as phenyl; and fluoroalkyl such as 3,3,3-trifluoromethyl, perfluorobutyl, and perfluorooctylethyl. Preferred thereamong are methyl, ethyl, propyl, butyl, and isobutyl. R² is an alkyl group and is preferably a C₁₋₁₀ alkyl group and particularly preferably is methyl, ethyl, or propyl. Y is a monovalent organic group, for example, C₁₋₁₀, that contains an aliphatically unsaturated bond and can be exemplified by acryl group-containing organic groups such as methacryloxy, acryloxy, 3-(methacryloxy)propyl, 3-(acryloxy)propyl, and so forth; alkenyl such as vinyl, hexenyl, allyl ; as well as the styryl group and vinyl ether group a is 0 or 1.

Component (B) can be specifically exemplified by 3-methacryloxytrimethoxysilane, 3-(methacryloxy)propyltrimethoxysilane, 3-(methacryloxy)propyltriethoxysilane, 3-(methacryloxy)propylmethyldimethoxysilane, 3-(acryloxy)propyltrimethoxysilane, vinyltrimethoxysilane, vinyltriethoxysilane, methylvinyldimethoxysilane, and allyltriethoxysilane. Component (B) is incorporated in the composition of the present invention at 1 to 100 weight parts and preferably 5 to 50 weight parts, in each case per 100 weight parts component (A).

Component (C) is colloidal silica, and this component increases the hardness of the cured film from the composition of the present invention and thereby brings about an increase in the scratch resistance. Component (C) is incorporated in the composition of the present invention at 1 to 300 weight parts and preferably 5 to 200 weight parts, in each case per 100 weight parts component (A). The surface of the silica in the component (C) colloidal silica may be modified by a hydrolyzable silicon group or by the silanol group, insofar as the objects of the present invention are not impaired. Due to the effect of the silica surface treatment brought about by component (B), the advantage accrues that even an unmodified colloidal silica can be used. This unmodified colloidal silica can be commercially acquired in the form of an acidic or basic dispersion. While colloidal silica in either form can be used in the present invention, when a basic colloidal silica is used the dispersion is preferably made acidic by a means such as the addition of an organic acid in order to prevent gelation of the composition and in order to prevent the silica from precipitating from the colloidal dispersion system.

The dispersion medium for component (C) is not particularly limited, but from the standpoint, inter alia, of the dryability is preferably a solvent with a relatively low boiling point, for example, 30 to 200°C and particularly 40 to 120°C at 1 atmosphere, i.e., is preferably an ordinary paint solvent. This dispersion medium can be specifically exemplified by water; alcohols, e.g., C₁₋₂₀ alcohols, such as methanol, ethanol, isopropanol, n-butanol, 2-methylpropanol, 4-hydroxy-4-methyl-2-pentanone, ethylene glycol, propylene glycol monomethyl ether (PGM), and polyethylene glycol monomethyl ether (PGME); cellosolves, e.g., C₁₋₁₀ cellosolves, such as methyl cellosolve, ethyl cellosolve, butyl cellosolve; as well as dimethylacetamide, toluene, xylene, methyl acetate, ethyl acetate, butyl acetate, and acetone. The use of water, an alcohol, and particularly propylene glycol monomethyl ether (PGM) as the dispersion medium is particularly preferred. In the following, the single material consisting of the colloidal silica and the dispersion medium dispersing the colloidal silica is referred to as the colloidal silica dispersion. The average particle size of the colloidal silica is suitably no greater than 200 nm from the standpoint of the dispersibility of the colloidal silica, while an average particle size of 1 to 100 nm is preferred and 1 to 50 nm is particularly preferred. When used in the form of a colloidal silica dispersion, the content, i.e., the concentration, of the colloidal silica may be freely selected, but 10 to 70 weight% is preferred for the corresponding ease of handling.

A characteristic feature of the present invention is the use in the photocurable resin composition comprising the previously described components (A) to (C) of the combination of a photopolymerization initiator having a specific absorption wavelength (component (D)) with an ultraviolet absorber having a specific absorption wavelength (component (E)). Thus, the use of the combination of component (D): an ultraviolet absorber having an absorption wavelength at 220 to 400 nm with component (E): a photopolymerization initiator having an absorption wavelength at 300 to 450 nm makes it possible to easily bring about ultraviolet radiation-mediated cure and to form a cured film that post-cure exhibits a high weathering resistance and an excellent ultraviolet absorbing performance at around the 300 nm wavelength.

Component (D) is an ultraviolet absorber that has an absorption wavelength at 220 to 400 nm and functions to improve the high weathering resistance of the cured film by providing the photocurable resin composition of the present invention with an ultraviolet absorbing performance at around the 300 nm wavelength. This component (D) has an excellent ultraviolet absorbing performance for short wavelength ultraviolet radiation at 220 to 400 nm and particularly around 300 nm and thereby improves the high weathering resistance of the cured film by preventing the deterioration of substrates comprising a thermoplastic resin, e.g., polycarbonate resin, caused by photodegradation and long-term exposure to solar radiation. Component (D), on the other hand, has little cure-inhibiting action on the component (E) photopolymerization initiator, thereby providing the advantage of making possible a facile ultraviolet-mediated curing of the composition.

Viewed from the perspective of the balance between the high weathering resistance of the cured film and the ultraviolet-mediated curability, component (D) is preferably (D1) an ultraviolet absorber that has an absorption wavelength at 260 to 400 nm. In addition, component (D) is preferably an ultraviolet absorber having an absorption wavelength at 220 to 400 nm that is selected from the group consisting of hydroxyphenyltriazine-type compounds, benzophenone-type compounds, and cyanoacrylate-type compounds. A single one of these may be used or two or more may be used in combination.

More specifically, component (D) is at least one ultraviolet absorber selected from hydroxyphenyltriazine-type compounds such as the 1-methoxy-2-propanol solutions of 2-[4-[(2-hydroxy-3-dodecyloxypropyl)oxy]-4,6-bis(2,4-dimethylphenyl)-1,3,5-triazine and 2-[4-[(2-hydroxy-3-tridecyloxypropyl)oxy]-4,6-bis(2,4-dimethylphenyl)-1,3,5-triazine, 2-[4-[(2-hydroxy-3-(2'-ethyl)hexyl)oxy]-2-hydroxyphenyl]-4,6-bis(2,4-dimethylphenyl)-1,3,5-triazine, 2-(2-hydroxy4-[1-octylcarbonylethoxy]phenyl)-4,6-bis(4-phenylphenyl)-1,3,5-triazine, and so forth; benzophenone-type compounds such as 2,4-dihydroxybenzophenone, 2-hydroxy-4-n-dodecyloxybenzophenone, 2-hydroxy-4-methoxybenzophenone, and so forth; and cyanoacrylate-type compounds such as 2-ethylhexyl 2-cyano-3,3'-diphenylacrylate, ethyl 2-cyano-3,3'-diphenylacrylate, and so forth. Component (D) is most preferably a hydroxyphenyltriazine-type compound.

These ultraviolet absorbers are commercially available, and product numbers TINUVIN 400, TINUVIN 405, and TINUVIN 479 (TINUVIN is a registered trademark) from Ciba Specially Chemicals are suitably used as the hydroxyphenyltriazine-type compound ultraviolet absorbers, wherein TINUVIN 400 (TINUVIN is a registered trademark) is particularly preferred for use.

The structural formulas of examples of suitable hydroxyphenyltriazine-type compound ultraviolet absorbers are provided below.

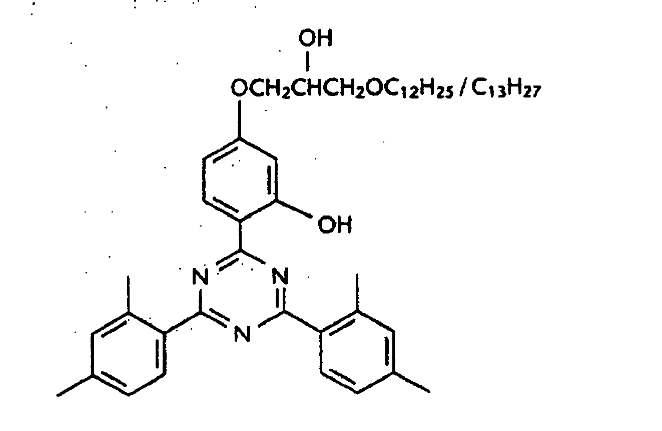

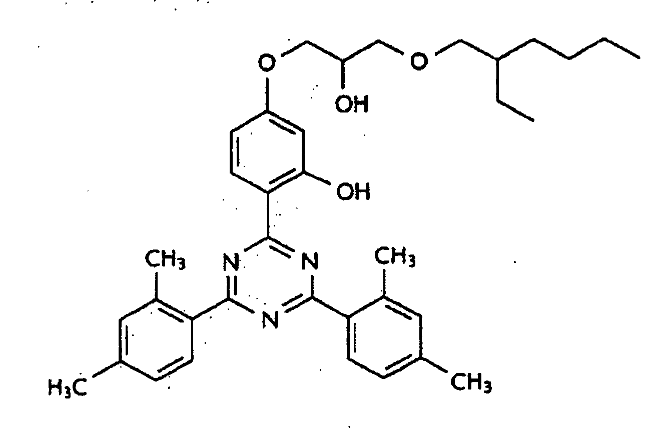

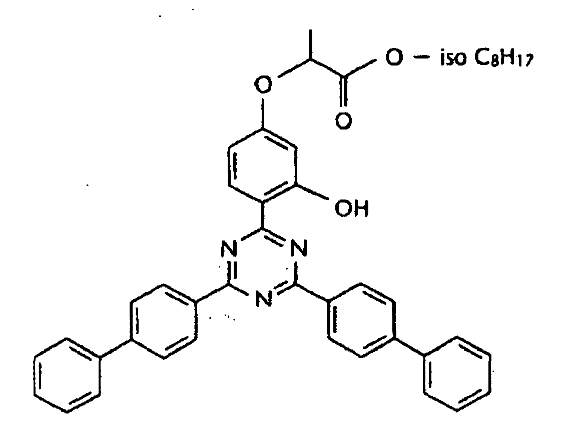

The quantity of incorporation of component (D) in the composition of the present invention is 0.01 to 20 weight parts per 100 weight parts component (A), wherein I to 10 weight parts is preferred from the perspective of the curing characteristics of the composition as a whole, the ultraviolet absorbing performance of the cured film, and improving the weathering resistance of the cured film. The ultraviolet absorbing performance of the cured film is inadequate below the aforementioned lower limit, while the ultraviolet curability of the composition may be reduced, notwithstanding this being component (D), when the aforementioned upper limit is exceeded.

Component (E), which is a photopolymerization initiator that has an absorption wavelength at 300 to 450 nm, promotes the ultraviolet exposure-mediated curing of the composition of the present invention. This component (E) of the present invention characteristically promotes the cure of the composition of the present invention by ultraviolet radiation at 300 to 450 nm, which are somewhat longer wavelengths than the short wavelength ultraviolet radiation at 220 to 400 nm where component (D) absorbs. As a consequence, this component (E) provides the advantage of making possible a rapid and facile ultraviolet radiation-mediated cure of the composition with almost no cure inhibition due to the component (D) ultraviolet absorber.

In addition, during the ultraviolet-mediated cure, the ultraviolet radiation around 300 nm, which induces the photodegradation and deterioration of, for example, polycarbonate resin, is also absorbed by component (D), and the cure of the composition of the present invention is therefore promoted by the ultraviolet radiation at 300 to 450 nm, which are wavelengths that have little effect on polycarbonate resin. This results in the advantage of inhibiting the ultraviolet cure-associated photodegradation and deterioration of substrates composed of a thermoplastic resin such as a polycarbonate resin.

Viewed from the perspective of the balance between the high weathering resistance of the cured film and the ultraviolet radiation-mediated curability, component (E) is preferably (E1) a photopolymerization initiator that has an absorption wavelength at 360 to 450 nm.

More specifically, component (E) is preferably a photopolymerization initiator having an absorption wavelength at 300 to 450 that is selected from 2,4,6-trimethylbenzoyldiphenylphosphine oxide, 2-methyl-1-[4-(methylthio)phenyl]-2-morpholinopropan-1-one, 1-hydroxycyclohexyl phenyl ketone, 2-benzyl-2-dimethylamino-1-(4-morpholinophenyl)butanon-1-one, bis-2,6-dimethoxybenzoyl-2,4,4-trimethylpentylphosphine oxide, benzophenone, thioxanthone, 2-chlorothioxanthone, 2,4-diethylthioxanthone, isopropylthioxanthone, and 1-chloro-4-propoxythioxanthone. A single one of these may be used or two or more may be used in combination.

2,4,6-trimethylbenzoyldiphenylphosphine oxide, 2-methyl-1-[4-(methylthio)phenyl]-2-morpholinopropan-1-one, 1-hydroxycyclohexyl phenyl ketone, and 2-benzyl-2-dimethylamino-1-(4-morpholinophenyl)butanon-1-one are particularly suitable examples of component (E). These photopolymerization initiators are commercially available, and product numbers IRGACURE 907, IRGACURE 184, and IRGACURE 369 (IRGACURE is a registered trademark) from Ciba Specialty Chemicals are suitably used.

The quantity of component (E) incorporation in the composition of the present invention is 0.01 to 30 weight parts per 100 weight parts component (A), wherein 5 to 20 weight parts is preferred from the perspective of the curing characteristics of the composition as a whole, the ultraviolet absorbing performance of the cured film, and improving the weathering resistance of the cured film. The ultraviolet curability of the composition is inadequate below the aforementioned lower limit, while the physical strength of the cured film product may be reduced, notwithstanding this being component (E), when the aforementioned upper limit is exceeded.

Component (F) imparts water repellency and lubricity to the cured film from the composition of the present invention, and can be exemplified by an organopolysiloxane fluid that has an amino-functional organic group in terminal position on the molecular chain and/or in a portion of the side chains on the molecular chain.

The amino-functional organic group in component (F) can be exemplified by the 2-aminoethyl group, 3-aminopropyl group, 3-(2-aminoethyl)aminopropyl group, and 6-aminohexyl group. The silicon-bonded groups other than the amino-functional organic group can be exemplified by alkyl groups such as methyl, ethyl, propyl, aryl groups such as phenyl; alkoxy groups such as methoxy, ethoxy, propoxy, and the hydroxyl group. The methyl group is preferred thereamong. The molecular structure of this organopolysiloxane is preferably straight chain or partially branched straight chain. Its siloxane degree of polymerization is preferably in the range of 2 to 1000, more preferably in the range of 2 to 500, and particularly preferably in the range of 2 to 300.

The primary amino group-containing organopolysiloxanes with the following formulas are preferred examples of component (F). Me denotes the methyl group in the following average molecular formulas.

NH₂C₉H₆-Me₂SiO(Me₂SiO)₁₀SiMe₂-C₃H₆NH₂

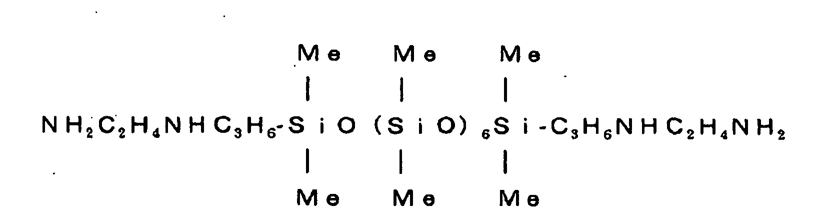

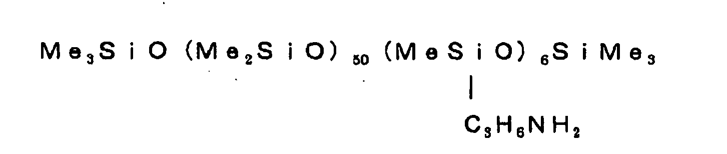

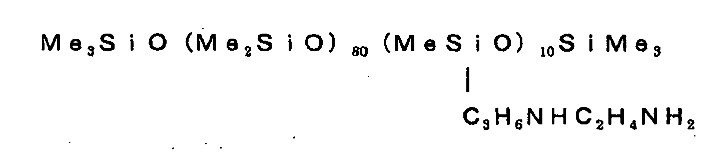

Component (F) is incorporated in the composition of the present invention at from 0.2 to 20 weight parts per 100 weight parts component (A) and preferably at from 1 to 10 weight parts per 100 weight parts component (A). The quantity of component (F) incorporation is more preferably a quantity whereby the molar quantity of the total amino group in component (F) is less than the molar quantity of the acrylate functional group or methacrylate functional group in component (A). In addition, the weight of component (F) is preferably not more than one-fifth the weight of component (A) because this provides excellent properties.

The photocurable resin composition of the present invention preferably also contains (G) a hindered amine-type photostabilizer. This component (G), because it acts to scavenge the radical species generated by the incoming ultraviolet radiation, provides through its co-use with the previously described ultraviolet absorber (component (D)) excellent synergistic effects with regard to the ultraviolet protective action exercised by the cured film and improving the weathering resistance of the cured film. This hindered amine-type photostabilizer may be a low molecular weight type or a high molecular weight type, and a mixture of two or more (G) hindered amine-type photostabilizers may be used in the photocurable resin composition of the present invention. This hindered amine-type photostabilizer is preferably a low molecular weight hindered amine-type photostabilizer.

The low molecular weight hindered amine-type photostabilizers can be exemplified by 2,4-bis[N-butyl-N-(1-cyclohexyloxy-2,2,6,6-tetramethylpiperidin-4-yl)amino]-6-(2-hydroxyethylamine), bis(2,2,6,6-tetramethyl-4-piperidyl) sebacate, bis(1-octyloxy-2,2,6,6-tetramethyl-4-piperidyl) sebacate, bis(1,2,2,6,6-pentamethyl-4-piperidinyl) sebacate, bis(1,2,2,6,6-pentamethyl-4-piperidyl) 2-(3,5-di-tert-butyl-4-hydroxybenzyl)-2-n-butylmalonate, tetrakis(1,2,2,6,6-pentamethyl-4-piperidyl) 1,2,3,4-butanetetracarboxylate, 1,2,2,6,6-pentamethyl-4-piperidyl/tridecyl 1,2,3,4-butanetetracarboxylate, and {1,2,2,6,6-pentamethyl-4-piperidyl/β,β,β',β'-tetramethyl-3,9-[2,4,8,10-tetraoxaspiro(5,5)undecane]diethyl}-1,2,3,4-butanetetracarboxylate.

The high molecular weight hindered amine-type photostabilizers can be exemplified by dimethyl succinate/1-(2-hydroxyethyl)-4-hydroxy-2,2,6,6-tetramethylpiperidine polycondensates, N,N'-bis(3-aminopropyl)ethylenediamine/2,4-bis[N-butyl-N-(1,2,2,6,6-pentamethyl-4-piperidyl)amino]-6-chloro-1,3,5-triazine condensates, poly[[6-[(1,1,3,3-tetramethylbutyl)amino]-1,3,5-triazin-2,4-diyl][(2,2,6,6-tetramethyl-4-piperidinyl)imino]], poly[{6-(1,1,3-trimethylpentyl)amino-1,3,5-triazin-2,4-diyl}{(N-methyl-2,2,6,6-tetramethylpiperidyl)imino}octamethylene{(N-methyl-2,2,6,6-tetramethylpiperidyl)imino}], poly[(6-morpholino-s-triazin-2,4-diyl)[1,2,2,6,6-pentamethyl-4-piperidyl]imino]hexamethylene[(1,2,2,6,6-pentamethyl-4-piperidyl)imino]], and poly[{6-(1,1,3,3-tetramethylbutyl)amino-1,3,5-triazin-2,4-diyl}{(2,2,6,6-tetramethylpiperidyl)imino}hexamethylene{(2,2,6,6-tetramethylpiperidyl)imino}].

These photostabilizers are commercially available, and product numbers TINUVIN 111 FDL, TINUVIN 123, TINUVIN 144, TINUVIN 152, TINUVIN 292, and TINUVIN 5100 (TINUVIN is a registered trademark) from Ciba Specialty Chemicals are examples. The structures of these photostabilizers are as represented below.

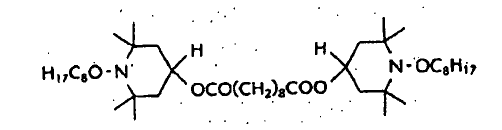

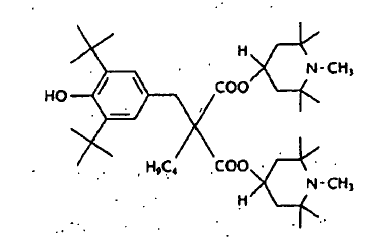

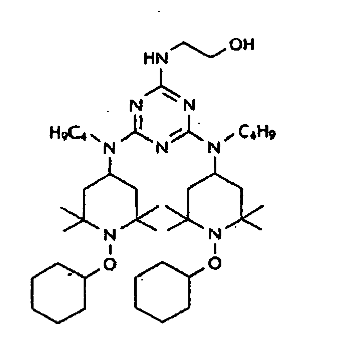

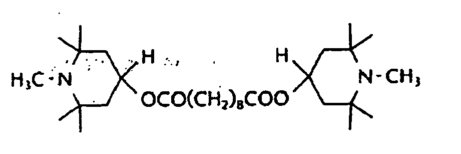

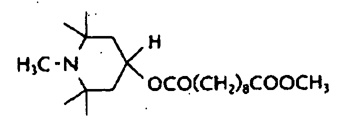

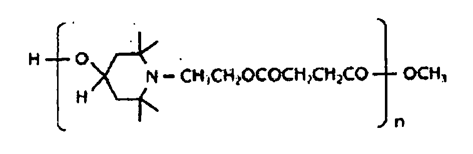

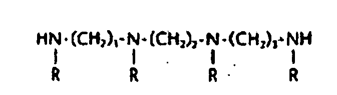

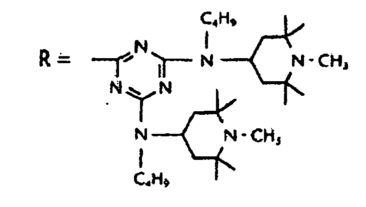

Component (G) is incorporated in the composition of the present invention at 0.1 to 15 weight parts and preferably 1 to 10 weight parts, in each case per 100 weight parts component (A). At below this lower limit, the ultraviolet protective effect exercised by the cured film and the improvement in its weathering resistance that are produced as synergistic effects with component (D) may be unsatisfactory. When the quantity of component (G) incorporation is too large, the strength of the cured film may decline and the ultraviolet curing characteristics may also decline.

The photocurable resin composition of the present invention may incorporate a solvent as a diluent, for example, an organic solvent and particularly an alcohol, and the use of (H) an alcohol containing organic solvent is particularly preferred.

Component (H) may be only an alcohol or may be a mixture of an alcohol with another solvent. Both the alcohol and the other solvent may be a combination of two or more species. The quantity of incorporation of component (H) in the photocurable resin composition of the present invention is preferably in the range of 10 to 1000 weight parts per 100 weight parts component (A) and more preferably is in the range of 10 to 500 weight parts per 100 weight parts component (A).

The alcohol encompassed by component (H) can be exemplified by alcohols such as methanol, ethanol, isopropyl alcohol, butanol, isobutyl alcohol, ethylene glycol, diethylene glycol, triethylene glycol, ethylene glycol monomethyl ether, diethylene glycol monomethyl ether, triethylene glycol monomethyl ether, propylene glycol monomethyl ether, and polyethylene glycol monomethyl ether (PGME). The non-alcohol organic solvent can be exemplified by ketones, for example, C₂₋₂₀ ketones such as acetone, methyl ethyl ketone, methyl isobutyl ketone; aromatic hydrocarbons, for example, C₂₋₂₀ aromatic hydrocarbons such as toluene, xylene; aliphatic hydrocarbons, for example, C₅₋₂₀ aliphatic hydrocarbons such as hexane, octane, heptane, and so forth; chlorinated organic solvents, for example, C₁₋₂₀ chlorinated organic solvents such as chloroform, methylene chloride, trichloroethylene, carbon tetrachloride; and esters, for example, C₁₋₂₀ esters such as ethyl acetate, butyl acetate, isobutyl acetate. The alcohol proportion is preferably in the range of 10 to 90 weight% of the total quantity of all solvents and more preferably is 30 to 70 weight%.

The composition of the present invention may also incorporate water as a component (I). This component (I) is an optional component that is used for the hydrolysis of component (B). Its quantity of incorporation is preferably in the range of I to 50 weight parts per 100 weight parts component (B) and more preferably in the range of 5 to 30 weight parts per 100 weight parts component (B). In general, component (B) reacts with the silanol groups on the surface of the component (C) colloidal silica and is also hydrolyzed by component (I). Due to this, component (I) is preferably incorporated in an amount that is less than the amount that can completely hydrolyze component (B).

The composition of the present invention may incorporate, within a range that does not impair the objects of the present invention, components other than those described above. Examples in this regard are tetraalkoxysilanes such as tetramethoxysilane; tetraethoxysilane, tetraisopropoxysilane, and so forth, and alkylalkoxysilanes such as methyltrimethoxysilane, methyltriethoxysilane, methyltriisopropoxysilane, ethyltrimethoxysilane, ethyltriethoxysi lane, ethyltriisopropoxysilane.

The composition of the present invention may incorporate the following on an optional basis within a range that does not impair the objects of the present invention: oxidation inhibitors; thickeners; surfactants such as leveling agents, defoamers, sedimentation inhibitors, dispersing agents, anti-static agents, anti-clouding agents, and so forth; colorants such as pigments, dyes ; fillers such as aluminum paste, talc; glass frit, metal powder ; and self-polymerization inhibitors for acrylates, such as butylated hydroxytoluene (BHT); phenothiazine (PTZ). Viewed from the perspective of the storage stability of the composition under consideration, 0.00001 to 0.001 weight part of a self-polymerization inhibitor for acrylates, e.g., phenothiazine (PTZ) and so forth, is particularly preferably incorporated per 100 weight parts component (A).

The method of producing the composition of the present invention may be freely selected, and production can be carried out by intermixing components (A) to (F), the optional components (G) to (I), and any other components. The composition of the present invention is preferably obtained by mixing component (A) with components (B), (C), (F), (H), and (I) and stirring for 0.1 to 10 hours at 25 to 90°C and then incorporating the remaining components (D), (E), and (G) and any other components while stirring.

The composition of the present invention has a uniform appearance due to the excellent compatibility among the individual components and can form a uniform and highly aesthetic film on various types of substrates. In addition, it can be applied at a desired thickness using known coating methods and has the advantages of not undergoing component separation after coating and of not dripping.

After the composition of the present invention has been coated on a substrate and dried, it can be cured in a very short period of time by exposure to high energy radiation. This high energy radiation can be exemplified by ultraviolet radiation, electron beam, and y radiation. Due to its extremely good ultraviolet curing behavior, the composition of the present invention is most preferably cured with ultraviolet radiation. The reason for this is that a cured thin film layer can be formed in a very short period of time when ultraviolet radiation is used. The ultraviolet exposure dose is at least 2 mJ/cm² and preferably is 100 to 3000 mJ/cm². The composition of the present invention dries at ambient temperature, but heat can be applied in order to effect a more rapid drying.

The substrate on which the inventive composition may be coated is not particularly limited, but a substrate comprising a thermoplastic resin, e.g., a polycarbonate resin, that is susceptible to photodegradation by ultraviolet radiation at around the 300 nm wavelength is most preferred. The material of the substrate can be exemplified by various plastics, e.g., polyolefin resins such as polyethylene, polypropylene, and so forth, polyester resins such as polyethylene terephthalate, polyethylene isophthalate, polyethylene-2,6-naphthalate, polybutylene terephthalate, and their copolymers, polyamide resins such as polyoxymethylene, thermoplastic resins such as polystyrene, poly(meth)acrylate esters, polyacrylonitrile, polyvinyl acetate, polycarbonate, cellophane, polyimide, polyetherimide, polyphenylene sulfone, polysulfone, polyetherketone, ionomer resins, fluororesins, and thermosetting resins such as melamine resins, polyurethane resins, epoxy resins, phenolic resins, unsaturated polyester resins, alkyd resins, urea resins, silicone resins ; and by glass; ceramics; metals such as aluminum, zinc, iron, nickel, cobalt, copper, tin, titanium, gold, silver, platinum, and alloys containing the preceding; concrete; wood; fibrous fabrics and textiles; fibers; nonwoven fabrics; leather; paper, and stone including marble.

The composition of the present invention cures to form an antiweathering cured film that exhibits an excellent capacity to absorb ultraviolet radiation at around the 300 nm wavelength, an excellent hardness, an excellent ability to prevent the adherence of oily contaminants, an excellent oily contaminant cleanability, an excellent scratch resistance, an excellent transparency, an excellent water repellency, an excellent adherence, an excellent smoothness, and an excellent uniformity. Due to this; the composition of the present invention is particularly preferably coated and cured with ultraviolet radiation on the surface of a substrate that must exhibit strength and beauty and is used in an environment of long-term exposure to solar radiation, e.g., outside, and more specifically on the surface of the plastic members used as a substitute for automotive glass windows and the plastic members used as a substitute for architectural and building window glass. The composition of the present invention is particularly preferably coated and cured with ultraviolet radiation on the surface of automotive exterior trim elements made of polycarbonate resin and polycarbonate resin exterior members for buildings.

The material of the substrate coated by the composition of the present invention is preferably a thermoplastic plastic. The application of the composition of the present invention to a polycarbonate resin is particularly suitable because this can provide a substantial improvement in the weathering resistance and physical strength. The shape of the substrate is not particularly limited and can be exemplified by plate, film, and sheet as well as bottle shapes and solid shapes. Preferred thereamong are thermoplastic plastic plates and thermoplastic plastic films. The thickness of the substrate is not particularly limited, but in the case of film and sheet the thickness will ordinarily be in the range of 5 to 100 µm, while in the case of the thicker plate shapes the thickness will ordinarily be in the range of 0.005 m to 0.1 m.

The method of applying the composition of the present invention is not particularly limited, and a thin film layer of the composition of the present invention can be formed on diverse substrate surfaces by known methods, for example, flow coating, immersion coating, rotational coating (spin coating), spray coating, curtain coating, gravure coating, Mayer bar coating, dip coating. In addition, prior to the coating operation, the surface of the substrate may be preliminarily subjected to a primer treatment with, for example, a silane coupling agent or hydrolyzate thereof; a surface activation treatment, for example, a corona treatment; or a known anchoring treatment using, for example, acrylic resin, urethane resin. Particularly suitable for use is polycarbonate resin that has been subjected to a primer treatment. With regard to the amount of application of the composition of the present invention, in those instances where scratch resistance is required an amount that provides a layer thickness of 0.5 to 25 µm is preferred while an amount that provides a layer thickness of 1 to 20 µm is more preferred. After the coating operation, the thin film is dried and ultraviolet curing is then performed.

In order to form a cured film having an excellent adherence to substrate when the composition of the present invention is applied on the surface of a substrate comprising a thermoplastic resin, e.g., a polycarbonate resin, that is susceptible to photodegradation by ultraviolet radiation around the 300 nm wavelength, a primer layer comprising a synthetic resin-containing composition is preferably formed in advance on the substrate. That is, in an embodiment that is particularly preferred from the standpoint of the adherence between the substrate and cured film, the substrate surface is consecutively coated by coating the substrate surface with a primer layer comprising a synthetic resin-containing composition and thereafter forming a cured film by applying the photocurable resin composition according to the present invention on the surface of the primer layer.

Because the composition of the present invention contains the previously described components (C), (D), and (E), in some instances a reduced adherence will occur between the cured film provided by the cure of the inventive composition and a substrate comprising a thermoplastic resin, for example, a polycarbonate resin. However, the adherence between this cured film and substrate is substantial improved by preliminarily coating the substrate surface with a primer layer comprising a synthetic resin-containing composition. Thus, the use of a primer layer comprising a synthetic resin-containing composition in combination with the application of the inventive composition on the substrate makes it possible to even more favorably obtain a substrate provided with an antiweathering cured film that exhibits an excellent capacity to absorb ultraviolet radiation at around the 300 nm wavelength, an excellent hardness, an excellent ability to prevent the adherence of oily contaminants, an excellent oily contaminant cleanability, an excellent scratch resistance, an excellent transparency, an excellent water repellency, an excellent adherence, an excellent smoothness, and an excellent uniformity, which is an object of the present invention.

This substrate characteristically has a primer layer comprising a synthetic resin-containing composition between the surface of the substrate and the cured film from the photocurable resin composition according to the present invention. Thus, as long as the adherence between the substrate and the cured film provided by the cure of the composition of the present invention remains unimpaired and as long as there is no loss of the technical effect that prevents the cured film from separating from or peeling off the substrate surface, the formation of the aforementioned primer layer comprising a synthetic resin-containing composition may be combined with a surface treatment by the previously described surface activation treatment, e.g., a corona treatment, by a silane coupling agent.

In addition, after a layer comprising a first cured film has been formed by consecutively coating the primer layer-bearing substrate with a cured film provided by the cure of the composition of the present invention, the same type of primer layer or a different type of primer layer may be formed on this cured film and a layer comprising a second cured film may then be formed by the consecutive application of a cured film provided by the cure of the composition of the present invention. Similarly, a substrate can be produced that has a structure in which two or more cured film layers provided by the cure of the inventive composition are stacked. Moreover, insofar as the technical effects of the present invention are not impaired, the substrate may have a structure in which the cured film provided by the cure of the composition of the present invention is stacked with a different type of coating layer having the purpose, for example, of imparting luster to the surface. Such a substrate having a surface coating structure formed by stacking a cured film provided by the cure of the inventive composition is encompassed within the technical range of the present invention.

The aforementioned primer layer comprising a synthetic resin-containing composition can be formed by coating a substrate with a primer coating composition comprising a known synthetic resin-containing composition and curing. Acrylic resins are preferred synthetic resins from the standpoint of the transparency of the primer layer and improving the adherence between the substrate and the cured film provided by the cure of the composition of the present invention, and the main component therein can be exemplified by polyacrylic resins, polymethacrylic resins, and polymers of multifunctional acrylates or multifunctional methacrylates.

This synthetic resin-containing primer layer can be readily formed by coating a substrate with a primer coating composition that contains at least one acrylic monomer selected from alkyl methacrylates, alkyl acrylates, multifunctional acrylates, and multifunctional methacrylates, or a monomer having a functional group copolymerizable with the preceding, and a known polymerization initiator, and applying heat or irradiating with high energy radiation such as ultraviolet radiation. The quantity of application of this primer coating composition may be freely selected, but is preferably a quantity that provides a layer thickness of 0.01 to 25 µm and more preferably is a quantity that provides a layer thickness of 0.05 to 5.0 µm. A quantity that provides a primer layer thickness of 0.1 to 2.0 µm is particularly preferred for the purpose of improving the adherence to a substrate comprising a thermoplastic resin, for example, a polycarbonate resin.

In the present invention, this primer layer is particularly preferably formed by coating the surface of the substrate with the primer coating composition comprising a synthetic resin-containing composition and photocuring. Having the primer layer be photocurable accrues the advantage of forming a tightly adherent state when the inventive composition is photocured due to the affinity generated between the primer layer and the cured film from the inventive composition, which results in a substantial improvement in the adherence between the substrate and the cured film provided by the cure of the composition of the present invention. However, it is preferred in the present invention that the primer layer have been photocured in advance on the substrate. The reason for this is as follows: because the composition of the present invention contains an ultraviolet absorber (the previously described component (D)), when, after the primer coating composition has been applied, the inventive composition is applied in the absence of photocuring on the still uncured primer coating layer, the ultraviolet radiation required for photocuring ends up being absorbed in the cured film from the inventive composition positioned as the upper layer, which may result in an inadequate cure of the primer layer.

Particularly suitable for use as the photocurable primer coating composition is a primer coating composition that contains the same multifunctional acrylate or multifunctional methacrylate as component (A) of the present invention.

In order to improve the adherence to substrate, e.g., polycarbonate resin, of the cured film provided by the cure of the composition of the present invention, a more preferred photocurable primer coating composition comprises a multifunctional acrylate or multifunctional methacrylate that is the previously described component (A), an aliphatically unsaturated bond-containing organoalkoxysilane that is the previously described component (B), a photopolymerization initiator, and an organic solvent.

The component (A), component (B), photopolymerization initiator, and organic solvent used in the primer coating composition that forms the primer layer are particularly preferably the same as the respective components used in the previously described composition of the present invention. A strong adherence in the resulting coating structure comprising the substrate-primer layer-cured film from the inventive composition can be realized and exfoliation of this cured film from the substrate can be effectively prevented by selection of the components in the primer coating composition.

More specifically, the primer layer most suitable for use is obtained by coating the substrate with a primer coating composition comprising (A) 100 weight parts of a multifunctional acrylate or multifunctional methacrylate, (B) 1 to 100 weight parts of an aliphatically unsaturated bond-containing organoalkoxysilane, 0.01 to 30 weight parts of a photopolymerization initiator, and 10 to 2000 weight parts of an organic solvent, drying, and subsequently irradiating with high energy radiation.

The component (A) and component (B) in this primer coating composition are the same as previously described. The photopolymerization initiator may be a known photopolymerization initiator but is not otherwise particularly limited.

In addition, a radical polymerization initiator can be used in this primer coating composition in place of the photopolymerization initiator optionally used in the photocuring or can be used in combination with the photopolymerization initiator. This radical polymerization initiator can be a heretofore known compound that is generally used in radical polymerization procedures, and specific examples thereof are azobis compounds such as 2,2'-azobis(isobutyronitrile), 2,2'-azobis(2-methylbutyronitrile), 2,2'-azobis(2,4-dimethylvaleronitrile), and organoperoxides such as benzoyl peroxide, lauroyl peroxide, tert-butylperoxy benzoate, tert-butylperoxy 2-ethylhexanoate.

The organic solvent used in the primer coating composition should be able to uniformly disperse components (A) and (B) and the photopolymerization initiator, but is not otherwise particularly limited; however, the same alcohol-containing organic solvent as the previously described component (H) is preferably used. The alcohol proportion is preferably in the range of 10 to 99 weight% of the total quantity of all solvents and more preferably is 30 to 95 weight%. The method for applying this primer coating composition and the method of curing by exposure to high energy radiation can be exemplified by the same methods as provided above with reference to the composition of the present invention.

### Examples

Examples and comparative examples are given below in order to specifically describe the present invention, but the present invention is not limited to the following examples. In the examples that follow, parts denotes weight parts in all cases and Me denotes the methyl group. The viscosity is the value measured at 25°C. The various properties referenced in the examples and comparative examples were measured using the following methods. The compound structures were identified using ¹H-NMR and ¹³C-NMR.

### Appearance

The condition of the surface of the cured film was visually inspected and scored using the following scale.
+ : uniform and transparent
× : approximately 0.5 to 5 mm peaks and valleys are present

### Water contact angle

A drop of water was introduced onto the cured film and 1 minute after introduction the water contact angle was measured at 25°C using a contact angle meter (CA-Z from Kyowa Interface Science Co., Ltd.).

### Pencil hardness

The pencil hardness of the cured film was measured based on the method described in JIS K 5600. The cured thin film was scratched with a pencil under a load of 1 kg, and the minimum pencil hardness that produced damage was used.

### Adherence

The adherence of the cured film was measured based on the method described in JIS K 5600. Ten vertical and ten horizontal cuts were introduced on a 1 mm interval in a checkerboard pattern in the cured thin film; cellophane tape was pasted on this; and a peeling test was then performed.

### Scratch resistance

This was evaluated as the difference (ΔH) in the haze of the cured film before and after a Taber abrasion test. The Taber abrasion test was performed using the following conditions: abrasive wheel: CS-10F, load: 500 g, rotation rate: 500 rotations/minute.

### Crawling by felt tip pen ink and ability to remove felt tip pen ink

Crawling by felt tip pen ink on the cured film was evaluated by drawing on the cured film at room temperature with a felt tip pen (an oil-based Mackee black pen from the ZEBRA Co., Ltd.) and visually inspecting the image and evaluating based on the following scale: + : no crawling; × : crawling was present. In addition, after drawing, the cured film was held for 5 minutes at room temperature and the felt tip pen ink was wiped from the cured film using a Kimwipe S-200 (from Nippon Paper Crecia Co., Ltd.). The ability to remove the felt tip pen ink from the cured film was evaluated using the following scale: + : could be removed; × : still darkened or could not be removed.

### Light transmittance at 300 nm and UV absorption characteristics

The light transmittance around the 300 nm wavelength and the absorption characteristics at 200 to 600 nm were measured on the cured film at room temperature using a UV measurement instrument (UV-1650PC from Shimadzu Corporation). The cured film coated on PET film was used for the sample, and the uncoated PET was used as the reference.

### Viscosity of the ultraviolet-curable composition

This was measured at 25°C using an E-type viscometer (DIGITAL VISCOMETER from TOKIOMEC Co., Ltd.).

### Hot water immersion test: evaluation of the adherence between the substrate and cured film

The sample, which had the cured film on the surface of the substrate, was immersed in hot water held at 100°C and the presence/absence of peeling of fragments of the cured film was evaluated after 0.5 hour and after 1.0 hour based on whether fragments of peeled cured film floated to the surface of the water.

### Example 1

14.2 g methyl ethyl ketone (abbreviated below as MEK), 17.4 g urethane acrylate resin (trade name: KAYARAD UX-5000, from Nippon Kayaku Co., Ltd.), and 0.36 g of a polydimethylsiloxane having 3-aminopropyl at both terminals (BY 16-853U from Dow Corning Toray Co., Ltd.) were introduced into a flask and were stirred for 1 hour while heating at 50°C. Once this had been cooled; 5.78 g 3-methacryloxytrimethoxysilane, 57.8 g of a PGM dispersion of colloidal silica having a concentration of 30 weight% and an average particle size for the colloidal silica of 13 nm, and 0.58 g water were added in the indicated sequence with stirring, after which heating was carried out to 50°C and stirring was performed for 1 hour. After cooling, the following were added to prepare "ultraviolet-curable composition 1": 2.10 g 2-methyl-1-[4-(methylthio)phenyl]-2-morpholinopropan-1-one (trade name: IRGACURE 907, from Ciba Specialty Chemicals) as the photopolymerization initiator, 1.0 g of a 1-methoxy-2-propanol solution.of 2-[4-[(2-hydroxy-3-dodecyloxypropyl)oxy]-4,6-bis(2,4-dimethylphenyl)-1,3,5-triazine and 2-[4-[(2-hydroxy-3-tridecyloxypropyl)oxy]-4,6-bis(2,4-dimethylphenyl)-1,3,5-triazine (TINUVIN 400, from Ciba Specialty Chemicals) as the ultraviolet absorber, 0.8 g 2,4-bis[N-butyl-N-(1-cyclohexyloxy-2,2,6,6-tetramethylpiperidin-4-yl)amino]-6-(2-hydroxyethylamine) (TINUVIN 152, from Ciba Specialty Chemicals) as a photostabilizer, and 4.3 mg phenothiazine. The viscosity of this ultraviolet-curable composition 1 was 6 mPa·s.

This ultraviolet-curable composition 1 was coated using a No. 9 Mayer bar on a 3 mm-thick polycarbonate sheet and was dried for 2 minutes at 120°C. Curing was then performed by exposure to 2000 mJ/cm² ultraviolet radiation using a UVC-02512S1AA01 from USHIO Inc. (lamp: UVH-0251 C-2200 metal halide lamp) to produce a polycarbonate sheet having an 8 µm-thick cured film (thin film layer) from ultraviolet-curable composition 1. The results of the measurements of the various properties of this cured film are reported in Table 1. The UV absorption characteristics of the cured film are shown in Figure 1.

### Comparative Example 1

The same procedure as in Example 1 was carried out, but in this case using 1-hydroxycyclohexyl phenyl ketone (trade name: IRGACURE 184, from Ciba Specialty Chemicals) as the photopolymerization initiator and omitting the use of the ultraviolet absorber and photostabilizer. The results of the measurements of the various properties of this cured film are reported in Table 1. The UV absorption characteristics of the cured film are shown in Figure 1.

### Comparative Example 2

The same procedure as in Example I was carried out, but in this case using 1-hydroxycyclohexyl phenyl ketone (trade name: IRGACURE 184, from Ciba Specialty Chemicals) as the photopolymerization initiator and using 2-[4-[(2-hydroxy-3-(2'-ethyl)hexyl)oxy]-2-hydroxyphenyl]-4,6-bis(2,4-dimethylphenyl)-1,3,5-triazine (trade name: TINUVIN 152, from Ciba Specialty Chemicals) as the ultraviolet absorber. The results of the measurements of the various properties of this cured film are reported in Table 1. The UV absorption characteristics of the cured film are shown in Figure 1.

### Comparative Example 3

The same procedure as in Example 1 was carried out, but in this case using bis(2,4,6-trimethylbenzoyl)phenylphosphine oxide (trade name: IRGACURE 819, from Ciba Specialty Chemicals) as the photopolymerization initiator and using the bis(2,2,6,6-tetramethyl-1-(octyloxy)-4-pipiridinyl) ester of decanedioic acid (trade name: TINUVIN 123, from Ciba Specialty Chemicals) as the photostabilizer.

**Table 1.**

| | Example 1 | Comparative Example 1 | Comparative Example 2 | Comparative Example 3 |
|---|---|---|---|---|
| appearance | + | + | + | + |
| light transmittance at 300 nm (%) | 0.45 | 70 | 3.4 | - |
| water contact angle (°) | 90 | 92 | - | - |
| adherence | 100/100 | 100/100 | 0/100 | 100/100 |
| pencil hardness | 3H | 3H | 2H | B |
| scratch resistance (ΔH) | 6.5 | 5.5 | 5.8 | 10.7 |
| Crawling by felt tip pen ink/ability to remove felt tip pen ink | +/+ | +/+ | - | - |

A cured film was obtained in Example 1 that absorbed ultraviolet radiation at 300 nm and that exhibited an excellent adherence, an excellent hardness, an excellent abrasion resistance, and an excellent resistance to staining with felt tip pen ink.

A good transmission of ultraviolet radiation around the 300 nm wavelength occurred in Comparative Example 1 because an ultraviolet absorber was not present in the cured film.

In addition, while a relatively hard cured film was formed in Comparative Example 2, the adherence between the cured film and the substrate was poor. This shows that the cured film of Comparative Example 2 was cured by the ultraviolet radiation only at the surface and that ultraviolet curing in the interior did not proceed adequately.

In Comparative Example 3, on the other hand, the adherence between the cured film and substrate was excellent, but a poor result was obtained for the hardness of the cured film. This shows that curing by the ultraviolet radiation did not proceed adequately.

Thus, in Comparative Examples 2 and 3, the physical properties of the cured film and the ultraviolet curing characteristics were unsatisfactory due to an unsuitable selection of the photopolymerization initiator and ultraviolet absorber.

### Examples of primer coating agent preparation

Primer-1 to primer-4 was prepared by mixing the components shown in Table 2 below to uniformity using mechanical force. Primer-1 is a thermosetting primer coating agent that contains a radical polymerization initiator, while primer-2 and primer-3 are photocurable primer coating agents. The quantities of incorporation of the individual components are given in the table in mass parts.

**Table 2.**

| component/(mass parts) | primer-1 | primer-2 | primer-3 | primer-4 |
|---|---|---|---|---|
| methyl methacrylate | 5.64 | | | |
| multifunctional acrylate DPHA (*1) | | 5.64 | | |
| multifunctional acrylate UX-5000 (*2) | | | 5.64 | |
| multifunctional acrylate DPHA-40H (*3) | | | | 5.64 |
| 3-methacryloxytrimethoxysilane | 2.42 | 2.42 | 2.42 | 2.42 |
| < radical polymerization initiator> 2,2'-azobis(2-methylbutyronitrile) | 0.10 | | | |
| < photopolymerization initiator > IRGACURE 907 (*4) | | 0.10 | 0.10 | 0.10 |
| xylene | 9.97 | | | |
| toluene | | 9.97 | 9.97 | 9.97 |
| cyclohexanone | 1.88 | | | |
| methyl isobutyl ketone | | 1.88 | 1.88 | 1.88 |
| polyethylene glycol monomethyl ether | 80.00 | 80.00 | 80.00 | 80.00 |

(*1) DPHA dipentaerythritol hexaacrylate/dipentaerythritol pentaacrylate (trade name: KAYARAD DPHA, multifunctional acrylate, from Nippon Kayaku Co., Ltd.)
(*2) UX-5000 (trade name: KAYARAD UX-5000, ester-type multifunctional urethane acrylate, from Nippon Kayaku Co., Ltd.)
(*3) DPHA-40H (trade name: KAYARAD DPHA-40H, ester-type multifunctional urethane acrylate, from Nippon Kayaku Co., Ltd.)
(*4) IRGACURE 907 2-methyl-1-[4-(methylthio)phenyl]-2-morpholinopropan-1-one (trade name: IRGACURE 907, from Ciba Specialty Chemicals)

### Example 2

Primer 1 was uniformly coated using a spin coater on a 3 mm-thick polycarbonate sheet and the heat-induced radical polymerization of primer-1 was then performed by standing for 2 hours at 120°C in an oven. This resulted in the formation of a uniform primer layer (the primer layer thickness was approximately 0.7 µm) from primer-1 on the surface of the polycarbonate sheet. The ultraviolet-curable composition 1 of the present invention was then coated on this primer layer by application using a No. 9 Mayer bar onto the 3 mm-thick polycarbonate sheet and drying was carried out for 2 minutes at 120°C. Curing was then performed by exposure to 2000 mJ/cm² ultraviolet radiation using a UVC-02512S1AA01 from USHIO Inc. (lamp: UVH-0251C-2200 metal halide lamp) to produce a polycarbonate sheet having a primer layer between the substrate and an 8 µm-thick cured film (thin film layer) from ultraviolet-curable composition 1. Table 3 reports the result of the hot water immersion test on this substrate.

### Examples 3 to 5

Primer-2 through primer-4 were each uniformly coated using a spin coater on a 3 mm-thick polycarbonate sheet followed by drying for 5 minutes at 120°C in an oven. A uniform primer layer (the primer layer thickness was approximately 0.7 µm) from the particular primer-2 to primer-4 was then formed on the surface of the polycarbonate sheet by photocuring by exposure to 2000 mJ/cm² ultraviolet radiation using a UVC-02512S1AA01 from USHIO Inc. (lamp: UVH-0251C-2200 metal halide lamp). The ultraviolet-curable composition 1 of the present invention was then coated on this primer layer by application using a No. 9 Mayer bar onto the 3 mm-thick polycarbonate sheet and drying was carried out for 2 minutes at 120°C. Curing was subsequently performed by exposure to 2000 mJ/cm² ultraviolet radiation using a UVC-02512S1AA01 from USHIO Inc. (lamp: UVH-0251C-2200 metal halide lamp) to produce a polycarbonate sheet having a primer layer between the substrate and an 8 µm-thick cured film (thin film layer) from ultraviolet-curable composition 1. Table 3 reports the result of the hot water immersion test on this substrate.

### Reference Example

A polycarbonate sheet bearing only the 8 µm-thick cured film (thin film layer) from ultraviolet-curable composition 1 was obtained by proceeding as in Examples 2 to 5, but in this instance without the use of the primer. Table 3 reports the result of the hot water immersion test on this substrate.

**Table 3.**

| | Example 2 | Example 3 | Example 4 | Example 5 | Reference Example |
|---|---|---|---|---|---|
| primer | primer-1 | primer-2 | primer-3 | primer-4 | none |
| type of primer | heat curable | photocurable | | | - |
| < hot water immersion test > | | | | | |
| 0.5 hour | no peeling | no peeling | no peeling | no peeling | peeling |
| 1.0 hour | no peeling | no peeling | no peeling | no peeling | - |
| 2.0 hours | partial peeling | no peeling | no peeling | no pealing | - |

As shown in Table 3, in the case of the polycarbonate sheet of Reference Example 1, which lacked the acrylic resin-containing primer layer, the cured film underwent peeling after a short period of hot water immersion, while in contrast the polycarbonate sheets provided with primers-1 to -4 did not exhibit peeling of the cured film even upon hot water immersion for 2 hours and thus maintained an excellent adherence. In particular, the polycarbonate sheets of Examples 3 to 5, which had photocurable primer layers, did not exhibit peeling of the cured film even after hot water immersion for 2 hours and thus exhibited a particularly excellent adherence.

### Industrial Applicability

As shown in the preceding, the photocurable resin composition of the present invention is useful as a coating agent for diverse substrates and as a film-forming agent for diverse substrates. In particular, the cured film provided by the cure of the photocurable resin composition of the present invention is particularly well qualified for improving the weathering resistance and surface protection of articles made of polycarbonate resin, which is susceptible to photodegradation and deterioration by ultraviolet radiation at around the 300 nm wavelength, and thus is extremely useful as a surface coating agent for automotive exterior trim elements and exterior members for buildings, which are employed in an environment of long-term exposure to solar radiation, e.g., outside.

The composition of the present invention, since it forms an antiweathering cured film that has an ultraviolet absorbing effect, can also be applied on low hardness, highly flexible substrates, such as natural rubber, synthetic rubber, in order to form a cured film on these flexible substrates. The synthetic rubbers can be exemplified by SBR, NBR, EPM, EPDM, nitrile rubber, urethane rubber, norbornene rubber, acrylic rubber, chloroprene rubber, epichlorohydrin rubber, silicone rubber, fluororubber. Particularly in the case of flexible silicone rubber substrates, it is useful to form a surface protective layer provided by the cure of the aforementioned composition on, for example, a keypad or roll surface. These substrates may take any form, e.g., sheet, film, roll, tube, and various molded articles. In addition, substrates filled with any of various fillers can be used without restriction. Among the preceding, application to a belt-shaped or roll-shaped substrate or any of various keypad-shaped substrates makes it possible to impart properties such as weathering resistance, ultraviolet absorptivity, resistance to the attachment of oily contaminants, oily contaminant cleanability, scratch resistance, wear resistance, and so forth, to the substrate surface without impairing the durability and without a loss of conformability to the substrate. Flexible substrates bearing this cured film are useful as key tops for keypads for portable phones, various types of remote controls, and so forth and for components of office automation equipment such as copiers, printers, e.g., charging rolls, transfer rolls, transfer belts; intermediate transfer belts; developing rolls, fixing rolls, cleaning blades.

## Claims

1. A photocurable resin composition comprising the following components (A) to (F):
(A) 100 weight parts of a multifunctional acrylate or a multifunctional methacrylate,
(B) 1 to 100 weight parts of an aliphatically unsaturated bond-containing organoalkoxysilane,
(C) 1 to 300 weight parts colloidal silica,
(D) 0.01 to 20 weight parts of an ultraviolet absorber that has an absorption wavelength at 220 to 400 nm,
(E) 0.01 to 30 weight parts of a photopolymerization initiator that has an absorption wavelength at 300 to 450 nm, and
(F) 0.2 to 20 weight parts of an amino-modified organopolysiloxane.

2. The photocurable resin composition according to claim 1, wherein component (D) is (D1) an ultraviolet absorber that has an absorption wavelength at 260 to 400 nm and component (E) is (E1) a photopolymerization initiator that has an absorption wavelength at 360 to 450 nm.

3. The photocurable resin composition according to claim 1 or 2, that additionally contains
(G) 0.1 to 15 weight parts of a hindered amine-type photostabilizer.

4. The photocurable resin composition according to any of claims 1 to 3, that additionally contains
(H) 10 to 1000 weight parts of an alcohol-containing organic solvent.

5. The photocurable resin composition according to any of claims 1 to 4, wherein component (A) is a multifunctional acrylate that contains an at least pentafunctional acrylate.

6. The photocurable resin composition according to claim 1, wherein component (E) is a photopolymerization initiator having an absorption wavelength at 300 to 450 nm, that is selected from the group consisting of 2-methyl-1-[4-(methylthio)phenyl]-2-morpholinopropan-1-one, 2-benzyl-2-dimethylamino-1-(4-morpholinophenyl)butanon-1-one, 2,4,6-trimethylbenzoyldiphenylphosphine oxide, bis-2,6-dimethoxybenzoyl-2,4,4-trimethylpentylphosphine oxide, and benzophenone.

7. The photocurable resin composition according to claim 1, wherein component (D) is an ultraviolet absorber having an absorption wavelength at 220 to 400 nm, that is selected from the group consisting of hydroxyphenyltriazine-type compounds, benzophenone-type compounds, and cyanoacrylate-type compounds.

8. A coating agent comprising the photocurable resin composition according to any of claims 1 to 7.

9. Use of the coating agent according to claim 8 for polycarbonate resin articles.

10. A coated substrate comprising a substrate selected from the group consisting of plastics, glass, ceramics, metals, concrete, wood, fibrous fabrics and textiles, fibers, nonwoven fabrics, leather, paper, and stone and having on its surface a cured film from the photocurable resin composition according to any of claims 1 to 7.

11. The coated substrate according to claim 10, that has a primer layer comprising a synthetic resin-containing composition between the surface of the substrate and the cured film from the photocurable resin composition according to any of claims 1 to 7.

12. The coated substrate according to claim 11, wherein the synthetic resin is an acrylic-type resin selected from the group consisting of polyacrylic resins, polymethacrylic resins, and polymers of multifunctional acrylates or multifunctional methacrylates.

13. The coated substrate according to claim 11, wherein the substrate is a polycarbonate resin.

14. A method of producing the substrate according to claim 11, **characterized by** sequentially coating the surface of the substrate by
coating a primer layer on the surface of the substrate by applying a primer coating composition comprising a synthetic resin-containing composition on the surface of the substrate and photocuring; and
thereafter forming a cured film by applying the photocurable resin composition according to any of claims 1 to 7 on the surface of the primer layer and photocuring.

15. The coated substrate according to claim 1, **characterized in that** the primer layer is provided by photocuring a composition comprising (A) 100 weight parts of a multifunctional acrylate or multifunctional methacrylate, (B) 1 to 100 weight parts of an aliphatically unsaturated bond-containing organoalkoxysilane, 0.01 to 30 weight parts of a photopolymerization initiator, and 10 to 2000 weight parts of an organic solvent.

## Patentansprüche

1. Photohärtbare Harzzusammensetzung, enthaltend die folgenden Komponenten (A) bis (F):
(A) 100 Gewichtsteile eines multifunktionellen Acrylats oder eines multifunktionellen Methacrylats,
(B) 1 bis 100 Gewichtsteile eines eine aliphatisch ungesättigte Bindung enthaltenden Organoalkoysilans,
(C) 1 bis 300 Gewichtsteile kolloidales Siliciumdioxid,
(D) 0,01 bis 20 Gewichtseile eines UV-Absorbers mit einer Absorptionswellenlänge bei 220 bis 400 nm,
(E) 0,01 bis 30 Gewichtsteile eines Photopolymerisationsinitiators mit einer Absorptionswellenlänge bei 300 bis 450 nm und
(F) 0,2 bis 20 Gewichtsteile eines aminomodifizierten Organopolysiloxans.

2. Photohärtbare Harzzusammensetzung gemäß Anspruch 1, wobei Komponente (D) ein UV-Absorber (D1) mit einer Absorptionswellenlänge bei 260 bis 400 nm ist und Komponente (E) ein Photopolymerisationsinitiator (E1) mit einer Absorptionswellenlänge bei 360 bis 450 nm ist.

3. Photohärtbare Harzzusammensetzung gemäß Anspruch 1 oder 2, die zusätzlich
(G) 0,1 bis 15 Gewichtsteile eines Photostabilisators des Typs eines gehinderten Amins enthält.

4. Photohärtbare Harzzusammensetzung gemäß einem der Ansprüche 1 bis 3, die zusätzlich
(H) 10 bis 1000 Gewichtsteile eines alkoholhaltigen organischen Lösungsmittels enthält.

5. Photohärtbare Harzzusammensetzung gemäß einem der Ansprüche 1 bis 4, wobei Komponente (A) ein multifunktionelles Acrylat ist, das ein mindestens pentafunktionelles Acrylat enthält.

6. Photohärtbare Harzzusammensetzung gemäß Anspruch 1, wobei Komponente (E) ein Photopolymerisationsinitiator mit einer Absorptionswellenlänge bei 300 bis 450 nm ist, der ausgewählt ist aus der Gruppe bestehend aus 2-Methyl-1-[4-(methylthio)phenyl]-2-morpholinopropan-1-on, 2-Benzyl-2-dimethylamino-1-(4-morpholinophenyl)butanon-1-on, 2,4,6-Trimethylbenzoyldiphenylphosphinoxid, Bis-2,6-dimethoxybenzoyl-2,4,4-trimethylpentylphosphinoxid und Benzophenon.

7. Photohärtbare Harzzusammensetzung gemäß Anspruch 1, wobei Komponente (D) ein UV-Absorber mit einer Absorptionswellenlänge bei 220 bis 400 nm ist, der ausgewählt ist aus der Gruppe bestehend aus Verbindungen des Hydroxyphenyltriazin-Typs, Verbindungen des Benzophenon-Typs und Verbindungen des Cyanoacrylat-Typs.

8. Beschichtungsmittel, enthaltend die photohärtbare Harzzusammensetzung gemäß einem der Ansprüche 1 bis 7.

9. Verwendung des Beschichtungsmittels gemäß Anspruch 8 für Gegenstände aus Polycarbonatharz.

10. Beschichtetes Substrat, umfassend ein Substrat, das aus der Gruppe bestehend aus Kunststoffen, Glas, Keramiken, Metallen, Beton, Holz, faserartigen Stoffen und Textilien, Fasern, nichtgewebten Stoffen, Leder, Papier und Stein ausgewählt ist und auf seiner Oberfläche einen gehärteten Film aus der photohärtbaren Harzzusammensetzung gemäß einem der Ansprüche 1 bis 7 aufweist.

11. Beschichtetes Substrat gemäß Anspruch 10, das eine Primerschicht enthaltend eine Zusammensetzung, die ein synthetisches Harz enthält, zwischen der Oberfläche des Substrats und dem gehärteten Films aus der photohärtbaren Harzzusammensetzung gemäß einem der Ansprüche 1 bis 7 aufweist.

12. Beschichtetes Substrat gemäß Anspruch 11, wobei das synthetische Harz ein Harz des Acryltyps ist, ausgewählt aus der Gruppe bestehend aus Polyacrylharzen, Polymethacrylharzen und Polymeren von multifunktionellen Acrylaten oder multifunktionellen Methacrylaten.

13. Beschichtetes Substrat gemäß Anspruch 11, wobei das Substrat ein Polycarbonatharz ist.

14. Verfahren zur Herstellung des Substrats gemäß Anspruch 11,
**gekennzeichnet durch** aufeinanderfolgendes Beschichten der Oberfläche des Substrats **durch**
Beschichten der Oberfläche des Substrats mit einer Primerschicht **durch** Aufbringen einer Primerschichtzusammensetzung, die eine ein synthetisches Harz enthaltende Zusammensetzung enthält, auf die Oberfläche des Substrats und Photohärten und
danach Bilden eines gehärteten Films **durch** Aufbringen der photohärtbaren Harzzusammensetzung gemäß einem der Ansprüche 1 bis 7 auf die Oberfläche der Primerschicht und Photohärten.

15. Beschichtetes Substrat gemäß Anspruch 11, **dadurch gekennzeichnet, dass** die Primerschicht durch Photohärten einer Zusammensetzung bereitgestellt wird, die enthält (A) 100 Gewichtsteile eines multifunktionellen Acrylats oder eines multifunktionellen Methacrylats, (B) 1 bis 100 Gewichtsteile eines eine aliphatisch ungesättigte Bindung enthaltenden Organoalkoysilans, 0,01 bis 30 Gewichtsteile eines Photopolymerisationsinitiators und 10 bis 2000 Gewichtsteile eines organischen Lösungsmittels.

## Revendications

1. Composition de résine photodurcissable comprenant les composants (A) à (F) suivants :
(A) 100 parties en poids d'un acrylate multifonctionnel ou d'un méthacrylate multifonctionnel ;
(B) 1 à 100 parties en poids d'un organoalcoxysilane contenant une liaison à insaturation aliphatique ;
(C) 1 à 300 parties en poids de silice colloïdale,
(D) 0,01 à 20 parties en poids d'un agent absorbant les ultraviolets qui a une longueur d'onde d'absorption à 220-400 nm,
(E) 0,01 à 30 parties en poids d'un amorceur de photopolymérisation qui a une longueur d'onde d'absorption à 300-450 nm, et
(F) 0,2 à 20 parties en poids d'un organopolysiloxane à modification amino.

2. Composition de résine photodurcissable selon la revendication 1, dans laquelle le composant (D) est (D1) un agent absorbant les ultraviolets qui a une longueur d'onde d'absorption à 260-400 nm et le composant (E) est (E1) un amorceur de photopolymérisation qui a une longueur d'onde d'absorption à 360-450 nm.

3. Composition de résine photodurcissable selon la revendication 1 ou 2, qui contient de plus
(G) 0,1 à 15 parties en poids d'un photostabilisant de type amine encombrée.

4. Composition de résine photodurcissable selon l'une quelconque des revendications 1 à 3, qui contient de plus
(H) 10 à 1000 parties en poids d'un solvant organique contenant un alcool.

5. Composition de résine photodurcissable selon l'une quelconque des revendications 1 à 4, dans laquelle le composant (A) est un acrylate multifonctionnel qui contient un acrylate au moins pentafonctionnel.

6. Composition de résine photodurcissable selon la revendication 1, dans laquelle le composant (E) est un amorceur de photopolymérisation ayant une longueur d'onde d'absorption à 300-450 nm, qui est choisi dans le groupe constitué par la 2-méthyl-1-[4-(méthylthio)phényl]-2-morpholinopropan-1-one, la 2-benzyl-2-diméthylamino-1-(4-morpholinophényl)butanon-1-one, l'oxyde de 2,4,6-triméthylbenzoyldiphénylphosphine, l'oxyde de bis-2,6-diméthoxybenzoyl-2,4,4-triméthylpentylphosphine, et la benzophénone.

7. Composition de résine photodurcissable selon la revendication 1, dans laquelle le composant (D) est un agent absorbant les ultraviolets ayant une longueur d'onde d'absorption à 220-400 nm, qui est choisi dans le groupe constitué par les composés de type hydroxyphényltriazine, les composés de type benzophénone, et les composés de type cyanoacrylate.

8. Agent de revêtement comprenant la composition de résine photodurcissable selon l'une quelconque des revendications 1 à 7.

9. Utilisation de l'agent de revêtement selon la revendication 8 pour des articles en résine de polycarbonate.

10. Substrat revêtu comprenant un substrat choisi dans le groupe constitué par les matières plastiques, le verre, les céramiques, les métaux, le béton, le bois, les étoffes et textiles fibreux, les fibres, les étoffes non tissées, le cuir, le papier et la pierre, et ayant sur sa surface un film durci provenant de la composition de résine photodurcissable selon l'une quelconque des revendications 1 à 7.

11. Substrat revêtu selon la revendication 10, qui a une couche d'apprêt comprenant une composition contenant une résine synthétique entre la surface du substrat et le film durci provenant de la composition de résine photodurcissable selon l'une quelconque des revendications 1 à 7.

12. Substrat revêtu selon la revendication 11, dans lequel la résine synthétique est une résine de type acrylique choisie dans le groupe constitué par les résines polyacryliques, les résines polyméthacryliques, et les polymères d'acrylates multifonctionnels ou de méthacrylates multifonctionnels.

13. Substrat revêtu selon la revendication 11, dans lequel le substrat est une résine de polycarbonate.

14. Procédé pour produire le substrat selon la revendication 11, **caractérisé en ce que** la surface du substrat est successivement revêtu par
déposition sous forme de revêtement d'une couche d'apprêt sur la surface du substrat par application d'une composition de revêtement d'apprêt comprenant une composition contenant une résine synthétique sur la surface du substrat, et photodurcissement ; et
ensuite formation d'un film durci par application de la composition de résine photodurcissable selon l'une quelconque des revendications 1 à 7 sur la surface de la couche d'apprêt, et photodurcissement.

15. Substrat revêtu selon la revendication 11, **caractérisé en ce que** la couche d'apprêt est formée par photodurcissement d'une composition comprenant (A) 100 parties en poids d'un acrylate multifonctionnel ou d'un méthacrylate multifonctionnel, (B) 1 à 100 parties en poids d'un organoalcoxysilane contenant une liaison à insaturation aliphatique, 0,01 à 30 parties en poids d'un amorceur de photopolymérisation, et 10 à 2000 parties en poids d'un solvant organique.
